(19) 

Europäisches
Patentamt

European
Patent Office

Office européen
des brevets

(11) **EP 3 536 090 B1**

(12) **EUROPEAN PATENT SPECIFICATION**

(45) Date of publication and mention
of the grant of the patent:
**19.07.2023 Bulletin 2023/29**

(21) Application number: **19709361.0**

(22) Date of filing: **09.01.2019**

(51) International Patent Classification (IPC):
**H04W 72/04** (2023.01)     **H04L 5/00** (2006.01)
**H04W 72/20** (2023.01)

(52) Cooperative Patent Classification (CPC):
**H04L 5/0053; H04L 5/0094; H04W 72/20;**
H04L 5/0048

(86) International application number:
**PCT/CN2019/071000**

(87) International publication number:
**WO 2019/137401 (18.07.2019 Gazette 2019/29)**

(54) **TERMINAL DEVICE, BASE STATION AND METHOD FOR CONTROL RESOURCE SET CONTROL CHANNEL ELEMENT TO RESOURCE ELEMENT GROUP MAPPING**

ENDGERÄTEVORRICHTUNG, BASISSTATION UND VERFAHREN ZUR
STEUERRESSOURCENEINSTELLUNG EINES STEUERKANALELEMENTS AUF
RESSOURCENELEMENTGRUPPENZUORDNUNG

DISPOSITIF TERMINAL, STATION DE BASE ET PROCÉDÉ DE MAPPAGE DE GROUPE
D'ÉLÉMENTS DE RESSOURCE SUR UN ÉLÉMENT DE CANAL DE COMMANDE D'ENSEMBLE DE
RESSOURCES DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2018 PCT/CN2018/072516**

(43) Date of publication of application:
**11.09.2019 Bulletin 2019/37**

(73) Proprietor: **Telefonaktiebolaget LM Ericsson
(publ)
164 83 Stockholm (SE)**

(72) Inventors:
• **LIN, Zhipeng
Jiangsu 211100 (CN)**
• **GRÖVLEN, Asbjörn
112 15 Stockholm (SE)**

(74) Representative: **Ericsson
Patent Development
Torshamnsgatan 21-23
164 80 Stockholm (SE)**

(56) References cited:
**WO-A2-2017/160100**

• **INTEL CORPORATION: "Remaining details of
NR-PDCCH structure", 3GPP DRAFT; R1-1720081
INTEL PDCCHSTRUCT, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Reno,
USA; 20171127 - 20171201 18 November 2017
(2017-11-18), XP051369762, Retrieved from the
Internet:
URL:http://www.3gpp.org/ftp/tsg%5Fran/WG1%
5FRL1/TSGR1%5F91/Docs/ [retrieved on
2017-11-18]**

- INTERDIGITAL COMMUNICATIONS: "Remaining issues related to CORESET configuration", 3GPP DRAFT; R1-1716475 REMAINING ISSUES RELATED TO CORESET CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Nagoya, Japan; 20170918 - 20170921 17 September 2017 (2017-09-17), XP051339928, Retrieved from the Internet: URL:http://www.3gpp.org/ftp/Meetings_3GPP_ SYNC/RAN1/Docs/ [retrieved on 2017-09-17]
- MEDIATEK INC: "Discussions on CORESET configurations", 3GPP DRAFT; R1-1710790 CORESET CONFIGURATION_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20170627 - 20170630 26 June 2017 (2017-06-26), XP051299994, Retrieved from the Internet: URL:http://www.3gpp.org/ftp/Meetings_3GPP_ SYNC/RAN1/Docs/ [retrieved on 2017-06-26]
- HUAWEI et al.: "CORESET configuration and search space design", 3GPP TSG RAN WGI Meeting #91, RI-1719387, 1 December 2017 (2017-12-01), XP051369296,
- Intel Corporation: "On DM-RS design for NR PDCCH", 3GPP TSG RAN WGI #89, R1-1707377, 19 May 2017 (2017-05-19), XP051272589,

**Description**

**Technical Field**

Embodiments of the disclosure generally relate to wireless communication, and, more particularly, to a terminal device, a base station (BS) and a method for control resource set (CORESET) control channel element (CCE) to resource element group (REG) mapping.

**Background**

This section introduces aspects that may facilitate better understanding of the present disclosure. Accordingly, the statements of this section are to be read in this light and are not to be understood as admissions about what is in the prior art or what is not in the prior art.

In order to connect to a network, a device needs to acquire network sync and obtain essential system information (SI) including SI in master information block (MIB) and remaining minimum system information (RMSI). Synchronization signals are used for adjusting the frequency of the device relative to the network, and for finding proper timing of the received signal from the network. In new radio (NR) system, the synchronization and access procedure may involve several signals described below.

Primary synchronization signal (PSS) allows for network detection in the presence of a high initial frequency error, up to tens of ppm. Secondary synchronization signal (SSS) allows for more accurate frequency adjustments and channel estimation while at the same time providing fundamental network information, e.g. cell identity (ID). Physical broadcast channel (PBCH) provides a subset of the minimum system information for random access and configurations for fetching remaining minimum system information in RMSI. It also provides timing information within a cell, e.g. to separate timing between beams transmitted from a cell. The amount of information to fit into the PBCH is highly limited to keep the size down. Furthermore, demodulation reference signal (DMRS) is interleaved with PBCH resources to receive it properly.

Synchronization signal and PBCH block (SS/PBCH block, or SSB in shorter format) comprises the above signals (PSS, SSS and PBCH DMRS), and PBCH. SSB may have 15kHz, 30kHz, 120kHz or 240kHz subcarrier spacing (SCS) depending on the frequency range. The content of PBCH payload is as shown in table 1 below.

| Information | Number of bits |
|---|---|
| RMSI Configuration | 8 |
| Subcarrier Spacing (of RMSI, Msg.2/4 for initial access and broadcasted OSI) | 1 |
| SFN | 10 |
| SS block time index | 3 |
| Half frame indication | 1 |
| "CellBarred" flag | 2 |
| Reserved RAN2 | 1 |
| 1st PDSCH DMRS position | 1 |
| PRB grid offset | 4 |
| Reserved bits (may also be used as additional bit for PRB grid offset in some cases) | 1 |
| CRC | 24 |
| Total including CRC | 56 |

Table 1. PBCH payload

RMSI is carried in physical downlink shared channel (PDSCH) scheduled by physical downlink control channel (PDCCH) in NR, and contains the remaining subset of minimum system information, e.g. the bit map of the actually transmitted SS/PBCH blocks. RMSI can have 15kHz, 30kHz, 60kHz or 120kHz SCS. After detecting one SS/PBCH block, UE will try to decode the corresponding RMSI to get remaining system information based on the RMSI control-resource set (CORESET) configurations in PBCH.

RMSI CORESET consists of a number ( $N_{RB}^{CORESET}$ ) of resource blocks in the frequency domain, and a number ( $N_{symb}^{CORESET}$ ) of orthogonal frequency division multiplexing (OFDM) symbols in the time domain. Based on 3rd generation partnership project (3GPP) technical specification (TS) 38.213 V15.0.0, $N_{RB}^{CORESET}$ can be 24, 48 or 96, and $N_{symb}^{CORESET}$ can be 1, 2, 3 OFDM symbols. A number of control channel elements (CCEs) and resource element groups (REGs) are defined in the CORESET.

A CCE consists of 6 REGs where a REG equals one resource block during one OFDM symbol. REGs within a CORESET are numbered in increasing order in a time-first manner, starting with 0 for the first OFDM symbol and the lowest-numbered resource block in the CORESET. CCE to REG mapping can be in interleaved manner or non-interleaved manner, which is described in section 7.3.2.2 of TS 38.211 V15.0.0.

Intel Corporation: "Remaining details of NR-PDCCH structure", 3GPP draft; R1-1720081, 18 November 2017 discloses interleaving and REG bundling size for RMSI CORSET.

Interdigital Communications: "Remaining issues related to CORSET configuration", R1-1716475, 17 September 2017 discloses CORESET configuration and group-common PDCCH.

## Summary

This summary is provided to introduce a selection of concepts in a simplified form that are further described below in the detailed description. This summary is not intended to identify key features or essential features of the claimed subject matter, nor is it intended to be used to limit the scope of the claimed subject matter. The present invention is defined by the appended independent claims.

One of the objects of the disclosure is to provide a solution for CORESET CCE to REG mapping.

According to a first aspect of the disclosure, there is provided a method implemented at a terminal device. The method comprises determining a set of PDCCH candidates based on one or more CORESET CCE to REG mapping related parameters. The one or more CORESET CCE to REG mapping related parameters are fixed.

In an embodiment of the disclosure, a number of the one or more CORESET CCE to REG mapping related parameters is more than one, and the more than one CORESET CCE to REG mapping related parameters comprise a CCE to REG mapping type which is fixed to be interleaved, and at least one interleaving related parameter.In an embodiment of the disclosure, the at least one interleaving parameter indicates an interleaver size to be 2, 3 or 6 and the step of determining is performed using a fixed interleaver with the indicated interleaver size.

In an embodiment of the disclosure, the CORESET CCEs are RMSI CORESET CCEs.

In an embodiment of the disclosure, the one or more CORESET CCE to REG mapping related parameters are predefined between the terminal device and a base station (BS).

In an embodiment of the disclosure, a number of the one or more CORESET CCE to REG mapping related parameters is one, and the one CORESET CCE to REG mapping related parameter is a CCE to REG mapping type which is fixed to be non-interleaved.

In this way, the terminal device can know the CCE to REG mapping pattern without using specific bits reserved in PBCH. Further, the overhead of the signaling may be reduced.

According to a second aspect of the disclosure, there is provided a method implemented at a terminal device. The method comprises obtaining information by detecting a synchronization signal (SS)/physical broadcast channel (PBCH) block. The method further comprises determining one or more CORESET CCE to REG mapping related parameters, based on the information obtained during the detection of the SS/PBCH block. A correspondence between the one or more CORESET CCE to REG mapping related parameters and the obtained information is predefined between the terminal device and a BS. The method further comprises determining a set of PDCCH candidates based on the one or more CORESET CCE to REG mapping related parameters.

In an embodiment of the disclosure, the obtained information comprises one or more unused bits in the SS/PBCH block.

In an embodiment of the disclosure, a number of the one or more unused bits in the SS/PBCH block is one, and the one unused bit indicates a CCE to REG mapping type to be set as non-interleaved. Alternatively, a number of the one or more unused bits in the SS/PBCH block is one, and the one unused bit indicates a CCE to REG mapping type to be set as interleaved, and at least one interleaving related parameter is fixed and predefined between the terminal device and the BS. Alternatively, a number of the one or more unused bits in the SS/PBCH block is more than one, and the more than one unused bits indicate a CCE to REG mapping type to be set as interleaved and at least one interleaving related parameter.

In an embodiment of the disclosure, the more than one unused bits in the SS/PBCH block comprise a first bit indicating the CCE to REG mapping type to be set as interleaved, and at least one second bit indicating at least one interleaving related parameter.

In an embodiment of the disclosure, the obtained information comprises at least one of: synchronization signal block (SSB) SCS; SCS of the PDCCH for RMSI; first four bits of RMSI Configuration in the SS/PBCH block; second four bits of RMSI Configuration in the SS/PBCH block; reserved bit(s) of RMSI Configuration in the SS/PBCH block; and SSB/RMSI multiplexing type.

In this way, the monitoring of PDCCH can be facilitated for the terminal device. Further, at least some of the interleaving parameters are configurable or can be different in different cases for the CCE to REG mapping.

According to a third aspect of the disclosure, there is provided a method implemented at a BS. The method comprises configuring CCEs in a CORESET based on one or more CORESET CCE to REG mapping related parameters. The one or more CORESET CCE to REG mapping related parameters are fixed.

In an embodiment of the disclosure, a number of the one or more CORESET CCE to REG mapping related parameters is more than one, and the more than one CORESET CCE to REG mapping related parameters comprise a CCE to REG mapping type which is fixed to be interleaved, and at least one interleaving related parameter.

In an embodiment of the disclosure, the at least one interleaving parameter indicates an interleaver size to be 2, 3 or 6 and the step of configuring is performed using a fixed interleaver with the indicated interleaver size.

In an embodiment of the disclosure, the CORESET CCEs are RMSI CORESET CCEs.

In an embodiment of the disclosure, the one or more CORESET CCE to REG mapping related parameters are predefined between the BS and a terminal device.

In an embodiment of the disclosure, a number of the one or more CORESET CCE to REG mapping related parameters is one, and the one CORESET CCE to REG mapping related parameter is a CCE to REG mapping type which is fixed to be non-interleaved.

In this way, there is no need for the base station to use specific bits reserved in PBCH. Further, the overhead of the signaling may be reduced.

According to a fourth aspect of the disclosure, there is provided a method implemented at a BS. The method comprises configuring CCEs in a CORESET based on one or more CORESET CCE to REG mapping related parameters. The method further comprises transmitting an SS/PBCH block. A correspondence between information used during the transmission of the SS/PBCH block and the one or more CORESET CCE to REG mapping related parameters is predefined between the BS and a terminal device.

In an embodiment of the disclosure, the information comprises one or more unused bits in the SS/PBCH block.

In an embodiment of the disclosure, a number of the one or more unused bits in the SS/PBCH block is one, and the one unused bit in the SS/PBCH block indicates a CCE to REG mapping type to be set as non-interleaved. Alternatively, a number of the one or more unused bits in the SS/PBCH block is one, and the one unused bit in the SS/PBCH block indicates a CCE to REG mapping type to be set as interleaved, and at least one interleaving related parameter is fixed and predefined between the BS and the terminal device. Alternatively, a number of the one or more unused bits in the SS/PBCH block is more than one, and the more than one unused bits indicate a CCE to REG mapping type to be set as interleaved and at least one interleaving related parameter.

In an embodiment of the disclosure, the more than one unused bits in the SS/PBCH block comprise a first bit indicating the CCE to REG mapping type to be set as interleaved, and at least one second bit indicating at least one interleaving related parameter.

In an embodiment of the disclosure, the information comprises at least one of: SSB SCS; SCS of the PDCCH for RMSI; first four bits of RMSI Configuration in the SS/PBCH block; second four bits of RMSI Configuration in the SS/PBCH block; reserved bit(s) of RMSI Configuration in the SS/PBCH block; and SSB/RMSI multiplexing type.

In this way, the base station can facilitate the monitoring of PDCCH for the terminal device. Further, at least some of the interleaving parameters are configurable or can be different in different cases for the CCE to REG mapping.

According to a fifth aspect of the disclosure, there is provided an apparatus implemented in a terminal device. The apparatus comprises one or more processors, and one or more memories comprising computer program codes. The one or more memories and the computer program codes are configured to, with the one or more processors, cause the apparatus at least to determine a set of PDCCH candidates based on one or more CORESET CCE to REG mapping related parameters. The one or more CORESET CCE to REG mapping related parameters are fixed.

In an embodiment of the disclosure, the one or more memories and the computer program codes are configured to, with the one or more processors, cause the apparatus to perform the method according to the above first aspect.

According to a sixth aspect of the disclosure, there is provided an apparatus implemented in a terminal device. The apparatus comprises one or more processors, and one or more memories comprising computer program codes. The one or more memories and the computer program codes are configured to, with the one or more processors, cause the apparatus at least to obtain information by detecting an SS/PBCH block. The apparatus is further caused to determine one or more CORESET CCE to REG mapping related parameters, based on the information obtained during the detection of the SS/PBCH block. A correspondence between the one or more CORESET CCE to REG mapping related parameters and the obtained information is predefined between the terminal device and a BS. The apparatus is further caused to determine a set of PDCCH candidates based on the one or more CORESET CCE to REG mapping related parameters.

In an embodiment of the disclosure, the one or more memories and the computer program codes are configured to, with the one or more processors, cause the apparatus to perform the method according to the above second aspect.

According to a seventh aspect of the disclosure, there is provided an apparatus implemented in a BS. The apparatus comprises one or more processors and one or more memories comprising computer program codes. The one or more memories and the computer program codes are configured to, with the one or more processors, cause the apparatus at least to configure CCEs in a CORESET based on one or more CORESET CCE to REG mapping related parameters. The one or more CORESET CCE to REG mapping related parameters are fixed.

In an embodiment of the disclosure, the one or more memories and the computer program codes are configured to, with the one or more processors, cause the apparatus to perform the method according to the above third aspect.

According to an eighth aspect of the disclosure, there is provided an apparatus implemented in a BS. The apparatus comprises one or more processors and one or more memories comprising computer program codes. The one or more memories and the computer program codes are configured to, with the one or more processors, cause the apparatus at least to configure CCEs in a CORESET based on one or more CORESET CCE to REG mapping related parameters. The apparatus is further caused to transmit an SS/PBCH block. A correspondence between information used during the transmission of the SS/PBCH block and the one or more CORESET CCE to REG mapping related parameters is predefined between the BS and a terminal device.

In an embodiment of the disclosure, the one or more memories and the computer program codes are configured to, with the one or more processors, cause the apparatus to perform the method according to the above fourth aspect.

According to a ninth aspect of the disclosure, there is provided a computer program product. The computer program product comprises instructions which when executed by at least one processor, cause the at least one processor to perform the method according to any of the above first to fourth aspects.

According to a tenth aspect of the disclosure, there is provided a computer-readable medium having computer program codes embodied thereon for use with a computer, wherein the computer program codes comprise codes for performing the method according to any of the above first to fourth aspects.

According to an eleventh aspect of the disclosure, there is provided an apparatus implemented in a terminal device. The apparatus comprises a determination module for determining a set of PDCCH candidates based on one or more CORESET CCE to REG mapping related parameters. The one or more CORESET CCE to REG mapping related parameters are fixed.

According to a twelfth aspect of the disclosure, there is provided an apparatus implemented in a terminal device. The apparatus comprises an obtaining module for obtaining information by detecting an SS/PBCH block. The apparatus further comprises a first determination module for determining one or more CORESET CCE to REG mapping related parameters, based on the information obtained during the detection of the SS/PBCH block. A correspondence between the one or more CORESET CCE to REG mapping related parameters and the obtained information is predefined between the terminal device and a BS. The apparatus further comprises a second determination module for determining a set of PDCCH candidates based on the one or more CORESET CCE to REG mapping related parameters.

According to a thirteenth aspect of the disclosure, there is provided an apparatus implemented in a BS. The apparatus comprises a configuration module for configuring CCEs in a CORESET based on one or more CORESET CCE to REG mapping related parameters. The one or more CORESET CCE to REG mapping related parameters are fixed.

According to a fourteenth aspect of the disclosure, there is provided an apparatus implemented in a BS. The apparatus comprises a configuration module for configuring CCEs in a CORESET based on one or more CORESET CCE to REG mapping related parameters. The apparatus further comprises a transmission module for transmitting an SS/PBCH block. A correspondence between information used during the transmission of the SS/PBCH block and the one or more CORESET CCE to REG mapping related parameters is predefined between the BS and a terminal device.

According to a fifteenth aspect of the disclosure, there is provided a method implemented in a communication system including a host computer, a base station and a terminal device. The method comprises, at the host computer, providing user data. The method further comprises, at the host computer, initiating a transmission carrying the user data to the terminal device via a cellular network comprising the base station. The terminal device determines a set of PDCCH candidates based on one or more CORESET CCE to REG mapping related parameters. The one or more CORESET CCE to REG mapping related parameters are fixed.

In an embodiment of the disclosure, the method further comprises, at the terminal device, receiving the user data from the base station.

According to a sixteenth aspect of the disclosure, there is provided a communication system including a host computer. The host computer comprises processing circuitry configured to provide user data and a communication interface configured to forward user data to a cellular network for transmission to a terminal device. The terminal device comprises a radio interface and processing circuitry. The terminal device's processing circuitry is configured to determine a set of PDCCH candidates based on one or more CORESET CCE to REG mapping related parameters. The one or more CORESET CCE to REG mapping related parameters are fixed.

In an embodiment of the disclosure, the communication system further includes the terminal device.

In an embodiment of the disclosure, the cellular network further includes a base station configured to communicate with the terminal device.

In an embodiment of the disclosure, the processing circuitry of the host computer is configured to execute a host application, thereby providing the user data. The terminal device's processing circuitry is configured to execute a client application associated with the host application.

According to a seventeenth aspect of the disclosure, there is provided a method implemented in a communication system including a host computer, a base station and a terminal device. The method comprises, at the host computer, providing user data. The method further comprises, at the host computer, initiating a transmission carrying the user data to the terminal device via a cellular network comprising the base station. The base station configures CCEs in a CORESET based on one or more CORESET CCE to REG mapping related parameters. The one or more CORESET CCE to REG mapping related parameters are fixed.

In an embodiment of the disclosure, the method further comprises, at the base station, transmitting the user data.

In an embodiment of the disclosure, the user data is provided at the host computer by executing a host application. The method further comprises, at the terminal device, executing a client application associated with the host application.

According to a eighteenth aspect of the disclosure, there is provided a communication system including a host computer. The host computer comprises processing circuitry configured to provide user data and a communication interface configured to forward the user data to a cellular network for transmission to a terminal device. The cellular network comprises a base station having a radio interface and processing circuitry. The base station's processing circuitry is configured to configure CCEs in a CORESET based on one or more CORESET CCE to REG mapping related parameters. The one or more CORESET CCE to REG mapping related parameters are fixed.

In an embodiment of the disclosure, the communication system further includes the base station.

In an embodiment of the disclosure, the communication system further includes the terminal device. The terminal device is configured to communicate with the base station.

In an embodiment of the disclosure, the processing circuitry of the host computer is configured to execute a host application, thereby providing the user data. The terminal device comprises processing circuitry configured to execute a client application associated with the host application.

According to a nineteenth aspect of the disclosure, there is provided a method implemented in a communication system including a host computer, a base station and a terminal device. The method comprises, at the host computer, providing user data. The method further comprises, at the host computer, initiating a transmission carrying the user data to the terminal device via a cellular network comprising the base station. The terminal device obtains information by detecting an SS/PBCH block. The terminal device determines one or more CORESET CCE to REG mapping related parameters, based on the information obtained during the detection of the SS/PBCH block. A correspondence between the one or more CORESET CCE to REG mapping related parameters and the obtained information is predefined between the terminal device and a base station. The terminal device determines a set of PDCCH candidates based on the one or more CORESET CCE to REG mapping related parameters.

In an embodiment of the disclosure, the method further comprises, at the terminal device, receiving the user data from the base station.

According to a twentieth aspect of the disclosure, there is provided a communication system including a host computer. The host computer comprises processing circuitry configured to provide user data and a communication interface configured to forward user data to a cellular network for transmission to a terminal device. The terminal device comprises a radio interface and processing circuitry. The terminal device's processing circuitry is configured to obtain information by detecting an SS/PBCH block. The terminal device's processing circuitry is further configured to determine one or more CORESET CCE to REG mapping related parameters, based on the information obtained during the detection of the SS/PBCH block. A correspondence between the one or more CORESET CCE to REG mapping related parameters and the obtained information is predefined between the terminal device and a base station. The terminal device's processing circuitry is further configured to determine a set of PDCCH candidates based on the one or more CORESET CCE to REG mapping related parameters.

In an embodiment of the disclosure, the communication system further includes the terminal device.

In an embodiment of the disclosure, the cellular network further includes a base station configured to communicate with the terminal device.

In an embodiment of the disclosure, the processing circuitry of the host computer is configured to execute a host application, thereby providing the user data. The terminal device's processing circuitry is configured to execute a client application associated with the host application.

According to a twenty first aspect of the disclosure, there is provided a method implemented in a communication system including a host computer, a base station and a terminal device. The method comprises, at the host computer, providing user data. The method further comprises, at the host computer, initiating a transmission carrying the user data to the terminal device via a cellular network comprising the base station. The base station configures CCEs in a CORESET based on one or more CORESET CCE to REG mapping related parameters. The base station transmits an SS/PBCH block. A correspondence between information used during the transmission of the SS/PBCH block and the one or more CORESET CCE to REG mapping related parameters is predefined between the base station and a terminal device.

In an embodiment of the disclosure, the method further comprises, at the base station, transmitting the user data.

In an embodiment of the disclosure, the user data is provided at the host computer by executing a host application. The method further comprises, at the terminal device, executing a client application associated with the host application.

According to a twenty second aspect of the disclosure, there is provided a communication system including a host computer. The host computer comprises processing circuitry configured to provide user data and a communication interface configured to forward the user data to a cellular network for transmission to a terminal device. The cellular network comprises a base station having a radio interface and processing circuitry. The base station's processing circuitry is configured to configure CCEs in a CORESET based on one or more CORESET CCE to REG mapping related parameters. The base station's processing circuitry is further configured to transmit an SS/PBCH block. A correspondence between information used during the transmission of the SS/PBCH block and the one or more CORESET CCE to REG mapping related parameters is predefined between the base station and a terminal device.

In an embodiment of the disclosure, the communication system further includes the base station.

In an embodiment of the disclosure, the communication system further includes the terminal device. The terminal device is configured to communicate with the base station.

In an embodiment of the disclosure, the processing circuitry of the host computer is configured to execute a host application, thereby providing the user data. The terminal device comprises processing circuitry configured to execute a client application associated with the host application.

**Brief Description of the Drawings**

These and other objects, features and advantages of the disclosure will become apparent from the following detailed description of illustrative embodiments thereof, which are to be read in connection with the accompanying drawings.

FIG. 1 is a flowchart illustrating a method implemented at a terminal device according to an embodiment of the disclosure;

FIG. 2 is a flowchart illustrating a method implemented at a terminal device according to another embodiment of the disclosure;

FIG. 3 is a flowchart illustrating a method implemented at a base station according to an embodiment of the disclosure;

FIG. 4 is a flowchart illustrating a method implemented at a base station according to another embodiment of the disclosure;

FIG. 5 is a block diagram showing an apparatus suitable for use in practicing some embodiments of the disclosure;

FIG. 6 is a block diagram showing an apparatus implemented in a terminal device according to an embodiment of the disclosure;

FIG. 7 is a block diagram showing an apparatus implemented in a base station according to an embodiment of the disclosure;

FIG. 8 is a block diagram showing an apparatus implemented in a terminal device according to another embodiment of the disclosure;

FIG. 9 is a block diagram showing an apparatus implemented in a base station according to another embodiment of the disclosure;

FIG. 10 is a diagram showing a telecommunication network connected via an intermediate network to a host computer in accordance with some embodiments;

FIG. 11 is a diagram showing a host computer communicating via a base station with a user equipment in accordance with some embodiments;

FIG. 12 is a flowchart illustrating a method implemented in a communication system in accordance with some embodiments;

FIG. 13 is a flowchart illustrating a methods implemented in a communication system in accordance with some embodiments;

FIG. 14 is a flowchart illustrating a method implemented in a communication system in accordance with some embodiments; and

FIG. 15 is a flowchart illustrating a method implemented in a communication system in accordance with some embodiments.

## Detailed Description

For the purpose of explanation, details are set forth in the following description in order to provide a thorough understanding of the embodiments disclosed. It is apparent, however, to those skilled in the art that the embodiments may be implemented without these specific details or with an equivalent arrangement.

The PBCH payload may be 56 bits including 24 bits cyclic redundancy check (CRC) and there is only 1 reserved bit ("Reserved bits" in Table 1) which is quite expensive. However, dynamic CCE-to-REG mapping methods may require more than 2 bits for interleaved or non-interleaved CCE-to-REG mapping. For example, in a case that interleaved CCE-to-REG mapping is used, at least two bits (one for indicating the type as "interleaved" and the other for indicating related parameter(s) such as interleaver size) may be needed.

So there will not always be free bits in PBCH reserved to carry the CCE to REG mapping related parameters for RMSI CORESET. Therefore, to make sure UE can always have the knowledge of CCE to REG mapping methods, it would be desirable to provide improved solutions.

The present disclosure proposes improved solutions for CORESET CCE to REG mapping. These solutions may be applied to a wireless communication system including a terminal device and a base station. The terminal device can communicate through a radio access communication link with the base station. The base station can provide radio access communication links to terminal devices that are within its communication service cell. The base station may be, for example, a gNB in NR. Note that the communications may be performed between the terminal device and the base station according to any suitable communication standards and protocols. The terminal device may also be referred to as, for example, device, access terminal, user equipment (UE), mobile station, mobile unit, subscriber station, or the like. It may refer to any end device that can access a wireless communication network and receive services therefrom. By way of example and not limitation, the terminal device may include a portable computer, an image capture terminal device such as a digital camera, a gaming terminal device, a music storage and playback appliance, a mobile phone, a cellular phone, a smart phone, a tablet, a wearable device, a personal digital assistant (PDA), or the like.

In an Internet of things (IoT) scenario, a terminal device may represent a machine or other device that performs monitoring and/or measurements, and transmits the results of such monitoring and/or measurements to another terminal device and/or a network equipment. In this case, the terminal device may be a machine-to-machine (M2M) device, which may, in a 3GPP context, be referred to as a machine-type communication (MTC) device. Particular examples of such machines or devices may include sensors, metering devices such as power meters, industrial machineries, bikes, vehicles, or home or personal appliances, e.g. refrigerators, televisions, personal wearables such as watches, and so on.

Now, several embodiments will be described to explain the solutions. As a first embodiment, the CORESET CCE to REG mapping type is fixed to one mapping type and one or more, particularly all, required parameters for this fixed mapping type are fixed. In other word, the CORESET CCE to REG mapping type is set to a fixed mapping type and one or more, particularly all, required parameters for this fixed mapping type are set to corresponding fixed values. The CCE to REG mapping type may refer to the mapping pattern between a CCE and its corresponding REGs. the CCE to REG mapping type may be set as "non-interleaved" or "interleaved". For example, the CORESET may be RMSI CORESET. As an option, the CORESET CCE to REG mapping type may be fixed to be non-interleaved. As another option, the CORESET CCE to REG mapping type may be fixed to be interleaved, the CORESET-interleaver-size may be hardcoded to be 2 or 3 or 6, and the general interleaver implemented for all types of CORESET may be used. In this way, UE can know the CCE to REG mapping pattern without using specific bits always reserved in PBCH.

As a second embodiment, some unused bit(s) in PBCH may be used for some scenarios to signal the CCE to REG mapping related parameters. For example, the 1 reserved bit in MIB may be used when it is not used in some scenarios (e.g. when the subcarrier spacing of SSB is no less than that of RMSI) to indicate the CORESET CCE to REG type. If non-interleaving is indicated by the 1 reserved bit, there will be no interleaving for CCE-to-REG mapping. If interleaving is indicated by the 1 reserved bit, then one fixed CCE to REG interleaving may be used, as described in the first embodiment.

As a third embodiment, the interleaving pattern may be included in some way together with the RMSI CORESET configuration (8 bits of "RMSI Configuration" in table 1). For example, some interleaving patterns may be defined and one to one or one to more mapping between interleaving-patterns and tables (13-1 to 13-8) defined in section 13 of TS 38.213 V15.0.0 may be introduced.

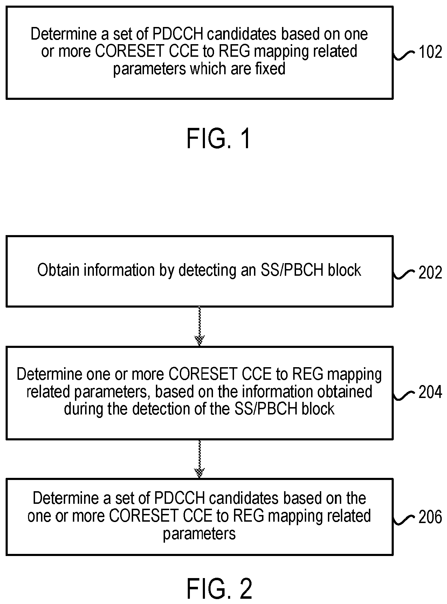

Hereinafter, the solutions will be further described with reference to FIGs. 1-5. FIG. 1 is a flowchart illustrating a method implemented at a terminal device according to an embodiment of the disclosure. At block 102, the terminal device determines a set of PDCCH candidates based on one or more CORESET CCE to REG mapping related parameters which are fixed. In this way, the terminal device can know the CCE to REG mapping pattern without using specific bits always reserved in PBCH. From the perspective of a wireless communication system including the terminal device and a base station, the fixed one or more CORESET CCE to REG mapping related parameters may be predefined between the terminal device and the base station.

As a first option, the number of the one or more CORESET CCE to REG mapping related parameters may be more than one. The more than one CORESET CCE to REG mapping related parameters may comprise a CCE to REG mapping type which is fixed to be interleaved, and at least one interleaving related parameter. For example, the at least one interleaving parameter may indicate an interleaver size to be 2, 3 or 6 and the determination at block 102 may be performed using a fixed interleaver with the indicated interleaver size.

Alterntively, as a second option, the number of the one or more CORESET CCE to REG mapping related parameters may be one. The one CORESET CCE to REG mapping related parameter may be a CCE to REG mapping type which is fixed to be non-interleaved.

FIG. 2 is a flowchart illustrating a method implemented at a terminal device according to another embodiment of the disclosure. At block 202, the terminal device obtains information by detecting an SS/PBCH block. That is, the obtained information may refer to such information that can be obtained during the detection of the SS/PBCH block. As a first option, the obtained information may comprise one or more unused bits in the SS/PBCH block (e.g. PBCH payload). As a second option, in accordance with the present invention, the obtained information comprises any one or more of: synchronization signal block (SSB) SCS; SCS of the PDCCH for RMSI; first four bits of RMSI Configuration in the SS/PBCH block; second four bits of RMSI Configuration in the SS/PBCH block; reserved bit(s) of RMSI Configuration in the SS/PBCH block; SSB/RMSI multiplexing type.

At block 204, the terminal device determines one or more CORESET CCE to REG mapping related parameters, based on the information obtained during the detection of the SS/PBCH block. The correspondence between the one or more CORESET CCE to REG mapping related parameters and the obtained information is predefined between the terminal device and a base station. Thus, the determination may be performed according to the predefined correspondence.

In the above first option, there may be three cases. As the first case, the number of the one or more unused bits in the SS/PBCH block may be one and the one unused bit may indicate a CCE to REG mapping type to be set as non-interleaved. As the second case, the number of the one or more unused bits in the SS/PBCH block may be one and the one unused bit may indicate a CCE to REG mapping type to be set as interleaved. In this case, at least one interleaving related parameter may be fixed and predefined between the terminal device and the base station. As the third case, the number of the one or more unused bits in the SS/PBCH block may be more than one. The more than one unused bits may indicate a CCE to REG mapping type to be set as interleaved and at least one interleaving related parameter. For example, the more than one unused bits in the SS/PBCH block may comprise a first bit indicating the CCE to REG mapping type to be set as interleaved, and at least one second bit indicating at least one interleaving related parameter.

In the above second option, for example, as defined in the first paragraph of section 13 of 3GPP TS 38.213 V15.0.0 which is cited here, the first four bits of RMSI Configuration corresponds to the entry points in Tables 13-1 through 13-8 and the second four bits of RMSI Configuration corresponds to the entry points in Tables 13-9 through 13-13. For example, the SSB SCS and the SCS of the PDCCH for RMSI are mentiond with respect to Tables 13-1 through 13-8 and Tables 13-11 through 13-13. For example, the SSB/RMSI multiplexing type is mentioned with respect to Tables 13-1 through 13-13. The correspondence between the one or more CORESET CCE to REG mapping related parameters and any one or more of the above information (such as the SSB SCS, the SCS of the PDCCH for RMSI, the first four bits of RMSI Configuration, the second four bits of RMSI Configuration, the reserved bit(s) of RMSI Configuration and the SSB/RMSI multiplexing type) may be predefined between the terminal device and the base station. As an exemplary example, when the combination of {SSB SCS, SCS of PDCCH for RMSI} takes different values (e.g. {15, 15}kHz, {15, 30}kHz, etc.), these different values may respectively correspond to different CCE to REG mapping patterns. At block 206, the terminal device determines a set of PDCCH candidates based on the one or more CORESET CCE to REG mapping related parameters.

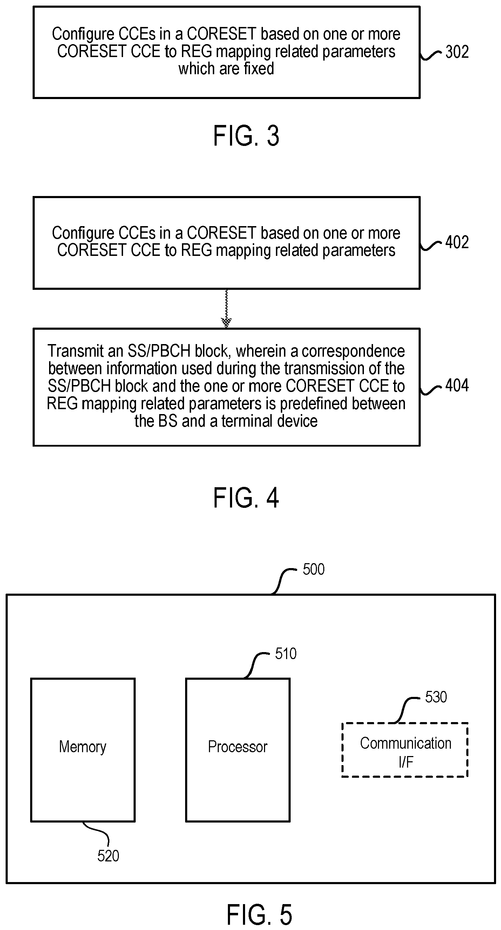

FIG. 3 is a flowchart illustrating a method implemented at a base station according to an embodiment of the disclosure. At block 302, the base station configures CCEs in a CORESET based on one or more CORESET CCE to REG mapping related parameters which are fixed. In this way, there is no need for the base station to use specific bits always reserved in PBCH. From the perspective of a wireless communication system including the base station and a terminal device, the fixed one or more CORESET CCE to REG mapping related parameters may be predefined between the base station and the terminal device.

As a first option, the number of the one or more CORESET CCE to REG mapping related parameters may be more than one. The more than one CORESET CCE to REG mapping related parameters may comprise a CCE to REG mapping type which is fixed to be interleaved, and at least one interleaving related parameter. For example, the at least one interleaving parameter may indicate an interleaver size to be 2, 3 or 6 and the configuring at block 302 may be performed using a fixed interleaver with the indicated interleaver size.

Alterntively, as a second option, the number of the one or more CORESET CCE to REG mapping related parameters may be one. The one CORESET CCE to REG mapping related parameter may be a CCE to REG mapping type which is fixed to be non-interleaved.

FIG. 4 is a flowchart illustrating a method implemented at a base station according to another embodiment of the disclosure. At block 402, the base station configures CCEs in a CORESET based on one or more CORESET CCE to REG mapping related parameters. At block 404, the base station transmits an SS/PBCH block. A correspondence between information used during the transmission of the SS/PBCH block and the one or more CORESET CCE to REG mapping related parameters is predefined between the base station and a terminal device.

The used information may refer to such information that is used during the transmission of the SS/PBCH block. As a first option, the used information may comprise one or more unused bits in the SS/PBCH block (e.g. PBCH payload). In this option, there may be three cases. As the first case, the number of the one or more unused bits in the SS/PBCH block may be one and the one unused bit may indicate a CCE to REG mapping type to be set as non-interleaved. As the second case, the number of the one or more unused bits in the SS/PBCH block may be one and the one unused bit may indicate a CCE to REG mapping type to be set as interleaved. In this case, at least one interleaving related parameter may be fixed and predefined between the base station and the terminal device. As the third case, the number of the one or more unused bits in the SS/PBCH block may be more than one. The more than one unused bits may indicate a CCE to REG mapping type to be set as interleaved and at least one interleaving related parameter. For example, the more than one unused bits in the SS/PBCH block may comprise a first bit indicating the CCE to REG mapping type to be set as interleaved, and at least one second bit indicating at least one interleaving related parameter.

As a second option, in accordance with the present invention, the used information comprises any one or more of: SSB SCS; SCS of the PDCCH for RMSI; first four bits of RMSI Configuration in the SS/PBCH block; second four bits of RMSI Configuration in the SS/PBCH block; reserved bit(s) of RMSI Configuration in the SS/PBCH block; SSB/RMSI multiplexing type. Similar to block 204, the correspondence between the one or more CORESET CCE to REG mapping related parameters and any one or more of the above information is predefined between the base station and the terminal device. It should be noted that two blocks shown in succession in the figures may, in fact, be executed substantially concurrently, or the blocks may sometimes be executed in the reverse order, depending upon the functionality involved.

FIG. 5 is a block diagram showing an apparatus suitable for use in practicing some embodiments of the disclosure. For example, at least part of any one of the terminal device and the BS described above may be implemented through the apparatus 500. As shown, the apparatus 500 may include a processor 510, a memory 520 that stores a program, and optionally a communication interface 530 for communicating data with other external devices through wired and/or wireless communication.

The program includes program instructions that, when executed by the processor 510, enable the apparatus 500 to operate in accordance with the embodiments of the present disclosure, as discussed above. That is, the embodiments of the present disclosure may be implemented at least in part by computer software executable by the processor 510, or by hardware, or by a combination of software and hardware.

The memory 520 may be of any type suitable to the local technical environment and may be implemented using any suitable data storage technology, such as semiconductor based memory devices, flash memories, magnetic memory devices and systems, optical memory devices and systems, fixed memories and removable memories. The processor 510 may be of any type suitable to the local technical environment, and may include one or more of general purpose computers, special purpose computers, microprocessors, digital signal processors (DSPs) and processors based on multi-core processor architectures, as non-limiting examples.

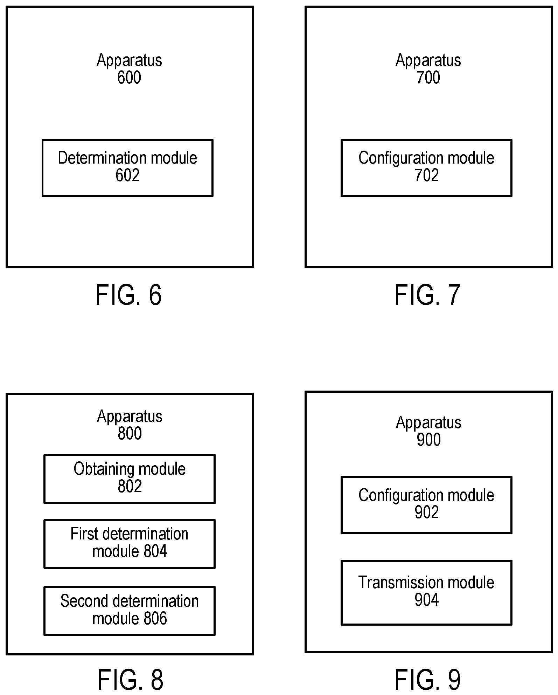

FIG. 6 is a block diagram showing an apparatus implemented in a terminal device according to an embodiment of the disclosure. As shown, the apparatus 600 implemented in the terminal device may comprise a determination module 602. The determination module 602 may be configured to determine a set of PDCCH candidates based on one or more CORESET CCE to REG mapping related parameters. The one or more CORESET CCE to REG mapping related parameters are fixed.

FIG. 7 is a block diagram showing an apparatus implemented in a base station according to an embodiment of the disclosure. As shown, the apparatus 700 implemented in the base station may comprise a configuration module 702. The configuration module 702 may be configured to configure CCEs in a CORESET based on one or more CORESET CCE to REG mapping related parameters. The one or more CORESET CCE to REG mapping related parameters are fixed.

FIG. 8 is a block diagram showing an apparatus implemented in a terminal device according to another embodiment of the disclosure. As shown, the apparatus 800 implemented in the terminal device may comprise an obtaining module 802, a first determination module 804 and a second determination module 806. The obtaining module 802 may be configured to obtain information by detecting an SS/PBCH block. The first determination module 804 may be configured to determine one or more CORESET CCE to REG mapping related parameters, based on the information obtained during the detection of the SS/PBCH block. A correspondence between the one or more CORESET CCE to REG mapping related parameters and the obtained information is predefined between the terminal device and a base station. The second determination module 806 may be configured to determine a set of PDCCH candidates based on the one or more CORESET CCE to REG mapping related parameters.

FIG. 9 is a block diagram showing an apparatus implemented in a base station according to another embodiment of the disclosure. As shown, the apparatus 900 implemented in the base station may comprise a configuration module 902 and a transmission module 904. The configuration module 902 may be configured to configure CCEs in a CORESET based on one or more CORESET CCE to REG mapping related parameters. The transmission module 904 may be configured to transmit an SS/PBCH block. A correspondence between information used during the transmission of the SS/PBCH block and the one or more CORESET CCE to REG mapping related parameters is predefined between the base station and a terminal device. The modules described above may be implemented by hardware, or software, or a combination of both.

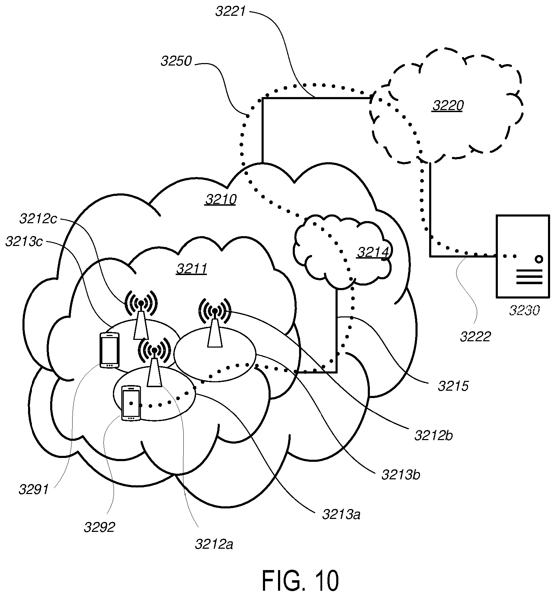

With reference to FIG. 10, in accordance with an embodiment, a communication system includes telecommunication network 3210, such as a 3GPP-type cellular network, which comprises access network 3211, such as a radio access network, and core network 3214. Access network 3211 comprises a plurality of base stations 3212a, 3212b, 3212c, such as NBs, eNBs, gNBs or other types of wireless access points, each defining a corresponding coverage area 3213a, 3213b, 3213c. Each base station 3212a, 3212b, 3212c is connectable to core network 3214 over a wired or wireless connection 3215. A first UE 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

Telecommunication network 3210 is itself connected to host computer 3230, which may be embodied in the hardware and/or software of a standalone server, a cloud-implemented server, a distributed server or as processing resources in a server farm. Host computer 3230 may be under the ownership or control of a service provider, or may be operated by the service provider or on behalf of the service provider. Connections 3221 and 3222 between telecommunication network 3210 and host computer 3230 may extend directly from core network 3214 to host computer 3230 or may go via an optional intermediate network 3220. Intermediate network 3220 may be one of, or a combination of more than one of, a public, private or hosted network; intermediate network 3220, if any, may be a backbone network or the Internet; in particular, intermediate network 3220 may comprise two or more subnetworks (not shown).

The communication system of FIG. 10 as a whole enables connectivity between the connected UEs 3291, 3292 and host computer 3230. The connectivity may be described as an over-the-top (OTT) connection 3250. Host computer 3230 and the connected UEs 3291, 3292 are configured to communicate data and/or signaling via OTT connection 3250, using access network 3211, core network 3214, any intermediate network 3220 and possible further infrastructure (not shown) as intermediaries. OTT connection 3250 may be transparent in the sense that the participating communication devices through which OTT connection 3250 passes are unaware of routing of uplink and downlink communications. For example, base station 3212 may not or need not be informed about the past routing of an incoming downlink communication with data originating from host computer 3230 to be forwarded (e.g., handed over) to a connected UE 3291. Similarly, base station 3212 need not be aware of the future routing of an outgoing uplink communication originating from the UE 3291 towards the host computer 3230.

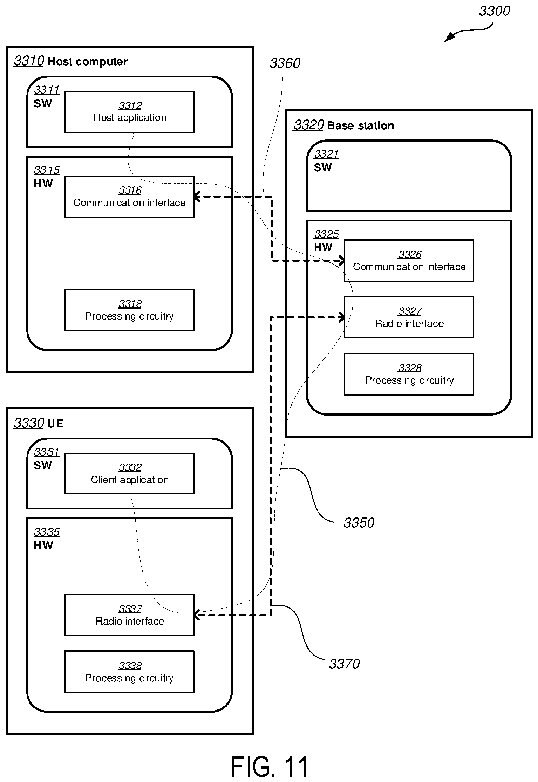

Example implementations, in accordance with an embodiment, of the UE, base station and host computer discussed in the preceding paragraphs will now be described with reference to FIG. 11. In communication system 3300, host computer 3310 comprises hardware 3315 including communication interface 3316 configured to set up and maintain a wired or wireless connection with an interface of a different communication device of communication system 3300. Host computer 3310 further comprises processing circuitry 3318, which may have storage and/or processing capabilities. In particular, processing circuitry 3318 may comprise one or more programmable processors, application-specific integrated circuits, field programmable gate arrays or combinations of these (not shown) adapted to execute instructions.

Host computer 3310 further comprises software 3311, which is stored in or accessible by host computer 3310 and executable by processing circuitry 3318. Software 3311 includes host application 3312. Host application 3312 may be operable to provide a service to a remote user, such as UE 3330 connecting via OTT connection 3350 terminating at UE 3330 and host computer 3310. In providing the service to the remote user, host application 3312 may provide user data which is transmitted using OTT connection 3350.

Communication system 3300 further includes base station 3320 provided in a telecommunication system and comprising hardware 3325 enabling it to communicate with host computer 3310 and with UE 3330. Hardware 3325 may include communication interface 3326 for setting up and maintaining a wired or wireless connection with an interface of a different communication device of communication system 3300, as well as radio interface 3327 for setting up and maintaining at least wireless connection 3370 with UE 3330 located in a coverage area (not shown in FIG. 11) served by base station 3320. Communication interface 3326 may be configured to facilitate connection 3360 to host computer 3310. Connection 3360 may be direct or it may pass through a core network (not shown in FIG. 11) of the telecommunication system and/or through one or more intermediate networks outside the telecommunication system. In the embodiment shown, hardware 3325 of base station 3320 further includes processing circuitry 3328, which may comprise one or more programmable processors, application-specific integrated circuits, field programmable gate arrays or combinations of these (not shown) adapted to execute instructions. Base station 3320 further has software 3321 stored internally or accessible via an external connection.

Communication system 3300 further includes UE 3330 already referred to. Its hardware 3335 may include radio interface 3337 configured to set up and maintain wireless connection 3370 with a base station serving a coverage area in which UE 3330 is currently located. Hardware 3335 of UE 3330 further includes processing circuitry 3338, which may comprise one or more programmable processors, application-specific integrated circuits, field programmable gate arrays or combinations of these (not shown) adapted to execute instructions. UE 3330 further comprises software 3331, which is stored in or accessible by UE 3330 and executable by processing circuitry 3338. Software 3331 includes client application 3332. Client application 3332 may be operable to provide a service to a human or non-human user via UE 3330, with the support of host computer 3310. In host computer 3310, an executing host application 3312 may communicate with the executing client application 3332 via OTT connection 3350 terminating at UE 3330 and host computer 3310. In providing the service to the user, client application 3332 may receive request data from host application 3312 and provide user data in response to the request data. OTT connection 3350 may transfer both the request data and the user data. Client application 3332 may interact with the user to generate the user data that it provides.

It is noted that host computer 3310, base station 3320 and UE 3330 illustrated in FIG. 11 may be similar or identical to host computer 3230, one of base stations 3212a, 3212b, 3212c and one of UEs 3291, 3292 of FIG. 10, respectively. This is to say, the inner workings of these entities may be as shown in FIG. 11 and independently, the surrounding network topology may be that of FIG. 10.

In FIG. 11, OTT connection 3350 has been drawn abstractly to illustrate the communication between host computer 3310 and UE 3330 via base station 3320, without explicit reference to any intermediary devices and the precise routing of messages via these devices. Network infrastructure may determine the routing, which it may be configured to hide from UE 3330 or from the service provider operating host computer 3310, or both. While OTT connection 3350 is active, the network infrastructure may further take decisions by which it dynamically changes the routing (e.g., on the basis of load balancing consideration or reconfiguration of the network).

Wireless connection 3370 between UE 3330 and base station 3320 is in accordance with the teachings of the embodiments described throughout this disclosure. One or more of the various embodiments improve the performance of OTT services provided to UE 3330 using OTT connection 3350, in which wireless connection 3370 forms the last segment. More precisely, the teachings of these embodiments may improve the latency and thereby provide benefits such as reduced user waiting time.

A measurement procedure may be provided for the purpose of monitoring data rate, latency and other factors on which the one or more embodiments improve. There may further be an optional network functionality for reconfiguring OTT connection 3350 between host computer 3310 and UE 3330, in response to variations in the measurement results. The measurement procedure and/or the network functionality for reconfiguring OTT connection 3350 may be implemented in software 3311 and hardware 3315 of host computer 3310 or in software 3331 and hardware 3335 of UE 3330, or both. In embodiments, sensors (not shown) may be deployed in or in association with communication devices through which OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of OTT connection 3350 may include message format, retransmission settings, preferred routing etc.; the reconfiguring need not affect base station 3320, and it may be unknown or imperceptible to base station 3320. Such procedures and functionalities may be known and practiced in the art. In certain embodiments, measurements may involve proprietary UE signaling facilitating host computer 3310's measurements of throughput, propagation times, latency and the like. The measurements may be implemented in that software 3311 and 3331 causes messages to be transmitted, in particular empty or 'dummy' messages, using OTT connection 3350 while it monitors propagation times, errors etc.

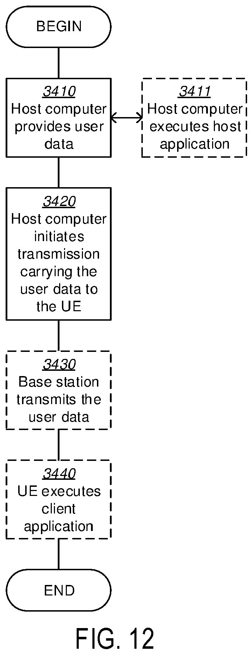

FIG. 12 is a flowchart illustrating a method implemented in a communication system, in accordance with one embodiment. The communication system includes a host computer, a base station and a UE which may be those described with reference to FIGs. 10 and 11. For simplicity of the present disclosure, only drawing references to FIG. 12 will be included in this section. In step 3410, the host computer provides user data. In substep 3411 (which may be optional) of step 3410, the host computer provides the user data by executing a host application. In step 3420, the host computer initiates a transmission carrying the user data to the UE. In step 3430 (which may be optional), the base station transmits to the UE the user data which was carried in the transmission that the host computer initiated, in accordance with the teachings of the embodiments described throughout this disclosure. In step 3440 (which may also be optional), the UE executes a client application associated with the host application executed by the host computer.

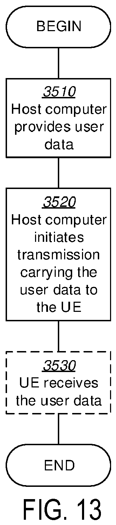

FIG. 13 is a flowchart illustrating a method implemented in a communication system, in accordance with one embodiment. The communication system includes a host computer, a base station and a UE which may be those described with reference to FIG. 10 and 11. For simplicity of the present disclosure, only drawing references to FIG. 13 will be included in this section. In step 3510 of the method, the host computer provides user data. In an optional substep (not shown) the host computer provides the user data by executing a host application. In step 3520, the host computer initiates a transmission carrying the user data to the UE. The transmission may pass via the base station, in accordance with the teachings of the embodiments described throughout this disclosure. In step 3530 (which may be optional), the UE receives the user data carried in the transmission.

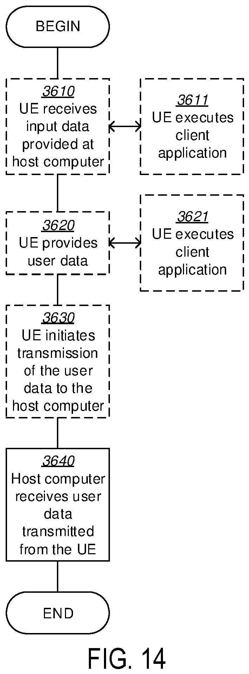

FIG. 14 is a flowchart illustrating a method implemented in a communication system, in accordance with one embodiment. The communication system includes a host computer, a base station and a UE which may be those described with reference to FIGs. 10 and 11. For simplicity of the present disclosure, only drawing references to FIG. 14 will be included in this section. In step 3610 (which may be optional), the UE receives input data provided by the host computer. Additionally or alternatively, in step 3620, the UE provides user data. In substep 3621 (which may be optional) of step 3620, the UE provides the user data by executing a client application. In substep 3611 (which may be optional) of step 3610, the UE executes a client application which provides the user data in reaction to the received input data provided by the host computer. In providing the user data, the executed client application may further consider user input received from the user. Regardless of the specific manner in which the user data was provided, the UE initiates, in substep 3630 (which may be optional), transmission of the user data to the host computer. In step 3640 of the method, the host computer receives the user data transmitted from the UE, in accordance with the teachings of the embodiments described throughout this disclosure.

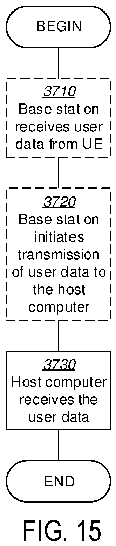

FIG. 15 is a flowchart illustrating a method implemented in a communication system, in accordance with one embodiment. The communication system includes a host computer, a base station and a UE which may be those described with reference to FIGs. 10 and 11. For simplicity of the present disclosure, only drawing references to FIG. 15 will be included in this section. In step 3710 (which may be optional), in accordance with the teachings of the embodiments described throughout this disclosure, the base station receives user data from the UE. In step 3720 (which may be optional), the base station initiates transmission of the received user data to the host computer. In step 3730 (which may be optional), the host computer receives the user data carried in the transmission initiated by the base station.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various embodiments.

In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

The present invention is defined by the appended independent claims.

## Claims

1. A method implemented at a terminal device, the method comprising:

   obtaining (202) information by detecting a synchronization signal/physical broadcast channel, SS/PBCH, block, wherein the obtained information comprises at least one of: synchronization signal block, SSB, subcarrier spacing, SCS; SCS of a physical downlink control channel, PDCCH, for remaining minimum system information, RMSI; first four bits of RMSI configuration in the SS/PBCH block; second four bits of RMSI Configuration in the SS/PBCH block; reserved bit(s) of RMSI configuration in the SS/PBCH block; and SSB/RMSI multiplexing type; determining (204) one or more control resource set, CORESET, control channel element, CCE, to resource element group, REG, mapping related parameters, based on the information obtained during the detection of the SS/PBCH block, wherein a correspondence between the one or more CORESET CCE to REG mapping related parameters and the obtained information is predefined between the terminal device and a base station, BS, determining (102, 206) a set of PDCCH candidates based on the one or more CORESET CCE to REG mapping related parameters.

2. The method according to claim 1, wherein the step of determining (102) is performed using a fixed interleaver with an indicated interleaver size.

3. The method according to claim 1 or 2, whererin the CORESET CCEs are remaining minimum system information, RMSI, CORESET CCEs.

4. An apparatus (500) implemented in a terminal device, comprising:

   one or more processors (510); and
   one or more memories (520) comprising computer program codes,
   the one or more memories (520) and the computer program codes configured to, with the one or more processors (510), cause the apparatus (500) at least to:

   obtain information by detecting a synchronization signal/physical broadcast channel, SS/PBCH, block, wherein the obtained information comprises at least one of: synchronization signal block, SSB, subcarrier spacing, SCS; SCS of a physical downlink control channel, PDCCH, for remaining minimum system information, RMSI; first four bits of RMSI configuration in the SS/PBCH block; second four bits of RMSI Configuration in the SS/PBCH block; reserved bit(s) of RMSI configuration in the SS/PBCH block; and SSB/RMSI multiplexing type;
determine one or more control resource set, CORESET, control channel element, CCE, to resource element group, REG, mapping related parameters, based on the information obtained during the detection of the SS/PBCH block, wherein a correspondence between the one or more CORESET CCE to REG mapping related parameters and the obtained information is predefined between the terminal device and a base station, BS,
determine a set of PDCCH, candidates based on one or more CORESET CCE to REG mapping related parameters.

5. The apparatus (500) according to claim 4, wherein the one or more memories (520) and the computer program codes are configured to, with the one or more processors (510), cause the apparatus (500) to perform the method according to any of claims 2 to 3.

6. A method implemented at a base station, BS, the method comprising:

configuring (302, 402) control channel elements, CCEs, in a control resource set, CORESET, based on one or more CORESET CCE to resource element group, REG, mapping related parameters,
transmitting (404) a synchronization signal/physical broadcast channel, SS/PBCH, block,
wherein a correspondence between information used during the transmission of the SS/PBCH block and the one or more CORESET CCE to REG mapping related parameters is predefined between the base station and a terminal device,
wherein the used information refers to information that is used during the transmission of the SS/PBCH block, wherein the used information comprises at least one of: synchronization signal block, SSB, subcarrier spacing, SCS; SCS of a physical downlink control channel, PDCCH, for remaining minimum system information, RMSI; first four bits of RMSI configuration in the SS/PBCH block; second four bits of RMSI Configuration in the SS/PBCH block; reserved bit(s) of RMSI configuration in the SS/PBCH block; and SSB/RMSI multiplexing type.

7. The method according to claim 6, wherein the step of configuring (302) is performed using a fixed interleaver with an indicated interleaver size.

8. The method according to claim 6 or 7, whererin the CORESET CCEs are remaining minimum system information, RMSI, CORESET CCEs.

9. An apparatus (500) implemented in a base station, BS, comprising:

one or more processors (510); and
one or more memories (520) comprising computer program codes,
the one or more memories (520) and the computer program codes configured to, with the one or more processors (510), cause the apparatus (500) at least to:

configure control channel elements, CCEs, in a control resource set, CORESET, based on one or more CORESET CCE to resource element group, REG, mapping related parameters;
transmit a synchronization signal/physical broadcast channel, SS/PBCH, block,
wherein a correspondence between information used during the transmission of the SS/PBCH block and the one or more CORESET CCE to REG mapping related parameters is predefined between the base station and a terminal device,
wherein the used information refers to information that is used during the transmission of the SS/PBCH block, wherein the used information comprises at least one of: synchronization signal block, SSB, subcarrier spacing, SCS; SCS of a physical downlink control channel, PDCCH, for remaining minimum system information, RMSI; first four bits of RMSI configuration in the SS/PBCH block; second four bits of RMSI Configuration in the SS/PBCH block; reserved bit(s) of RMSI configuration in the SS/PBCH block; and SSB/RMSI multiplexing type.

10. The apparatus (500) according to claim 9, wherein the one or more memories (520) and the computer program codes are configured to, with the one or more processors (510), cause the apparatus (500) to perform the method according to any of claims 6 to 8.

**Patentansprüche**

1. Verfahren, das an einer Endgerätevorrichtung implementiert wird, wobei das Verfahren umfasst:

   Erhalten (202) von Informationen durch Erkennen eines Blocks von Synchronisationssignal/physikalischem Broadcast-Kanal, SS/PBCH,
   wobei die erhaltenen Informationen mindestens eines umfassen von: einem Synchronisationssignalblock-, SSB- , Unterträgerabstand, SCS; einem SCS eines physikalischen Downlink-Steuerkanals, PDCCH, für verbleibende Mindestsysteminformationen, RMSI; ersten vier Bits von RMSI-Konfiguration im SS/PBCH-Block; zweiten vier Bits von RMSI-Konfiguration im SS/PBCH-Block; reservierten Bit(s) von RMSI-Konfiguration im SS/PBCH-Block; und SSB/RMSI-Multiplex-Typ;
   Bestimmen (204) eines oder mehrerer Parameter in Bezug auf die Zuordnung von Steuerressourcensatz-, CORESET- ,Steuerkanalelementen, CCE, zu Ressourcenelementgruppen, REG, basierend auf den während der Erkennung des SS/PBCH-Blocks erhaltenen Informationen, wobei eine Entsprechung zwischen dem einen oder den mehreren Parametern in Bezug auf CORESET-CCE-REG-Zuordnung und den erhaltenen Informationen zwischen der Endgerätevorrichtung und einer Basisstation, BS, vordefiniert ist,
   Bestimmen (102, 206) eines Satzes von PDCCH-Kandidaten basierend auf dem einen oder den mehreren Parametern in Bezug auf die CORESET-CCE-zu-REG-Zuordnung.

2. Verfahren nach Anspruch 1, wobei der Schritt des Bestimmens (102) unter Verwendung eines festen Verschachtelers mit einer angegebenen Verschachtelergröße ausgeführt wird.

3. Verfahren nach Anspruch 1 oder 2, wobei die CORESET-CCEs CORESET-CCEs für verbleibende Mindestsysteminformationen, RMSI, sind.

4. Einrichtung (500), die in einer Endgerätevorrichtung implementiert ist und umfasst:

   einen oder mehrere Prozessoren (510); und
   einen oder mehrere Speicher (520), die Computerprogrammcodes aufweisen,
   wobei der eine oder die mehreren Speicher (520) und die Computerprogrammcodes so konfiguriert sind, dass sie mit dem einen oder den mehreren Prozessoren (510) die Einrichtung (500) zumindest veranlassen zum:

   Erhalten von Informationen durch Erkennen eines Blocks von Synchronisationssignal/physikalischem Broadcast-Kanal, SS/PBCH,
   wobei die erhaltenen Informationen mindestens eines umfassen von: einem Synchronisationssignalblock-, SSB- , Unterträgerabstand, SCS; einem SCS eines physikalischen Downlink-Steuerkanals, PDCCH, für verbleibende Mindestsysteminformationen, RMSI; ersten vier Bits von RMSI-Konfiguration im SS/PBCH-Block; zweiten vier Bits von RMSI-Konfiguration im SS/PBCH-Block; reservierten Bit(s) von RMSI-Konfiguration im SS/PBCH-Block; und SSB/RMSI-Multiplex-Typ;
   Bestimmen eines oder mehrerer Parameter in Bezug auf die Zuordnung von Steuerressourcensatz-, CORESET- ,Steuerkanalelementen, CCE, zu Ressourcenelementgruppen, REG, basierend auf den während der Erkennung des SS/PBCH-Blocks erhaltenen Informationen, wobei eine Entsprechung zwischen dem einen oder den mehreren Parametern in Bezug auf CORESET-CCE-REG-Zuordnung und den erhaltenen Informationen zwischen der Endgerätevorrichtung und einer Basisstation, BS, vordefiniert ist,
   Bestimmen, eines Satzes von PDCCH-Kandidaten basierend auf einem oder mehreren Parametern in Bezug auf die CORESET-CCE-zu-REG-Zuordnung.

5. Einrichtung (500) nach Anspruch 4, wobei der eine oder die mehreren Speicher (520) und die Computerprogrammcodes so konfiguriert sind, dass sie mit dem einen oder den mehreren Prozessoren (510) die Einrichtung (500) zum Durchführen des Verfahrens nach einem der Ansprüche 2 bis 3 veranlassen.

6. Verfahren, das an einer Basisstation implementiert wird, wobei das Verfahren umfasst:

   Konfigurieren (302, 402) von Steuerkanalelementen, CCEs, in einem Steuerressourcensatz, CORESET, basierend auf einem oder mehreren Parametern in Bezug auf CORESET-CCE-zu-Ressourcenelementgruppen-, REG- ,Zuordnung,
   Senden (404) eines Blocks von Synchronisationssignal/physikalischem Broadcast-Kanal, SS/PBCH,
   wobei eine Entsprechung zwischen den während der Übertragung des SS/PBCH-Blocks verwendeten Informationen und dem einen oder den mehreren Parametern in Bezug auf CORESET-CCE-REG-Zuordnung zwischen der Basisstation, BS, und einer Endgerätevorrichtung vordefiniert ist,

wobei die verwendeten Informationen sich auf Informationen beziehen, die während der Übertragung des SS/PBCH-Blocks verwendet werden,

wobei die verwendeten Informationen mindestens eines umfassen von: einem Synchronisationssignalblock-, SSB- , Unterträgerabstand, SCS; einem SCS eines physikalischen Downlink-Steuerkanals, PDCCH, für verbleibende Mindestsysteminformationen, RMSI; ersten vier Bits von RMSI-Konfiguration im SS/PBCH-Block; zweiten vier Bits von RMSI-Konfiguration im SS/PBCH-Block; reservierten Bit(s) von RMSI-Konfiguration im SS/PBCH-Block; und SSB/RMSI-Multiplex-Typ;

7. Verfahren nach Anspruch 6, wobei der Schritt des Konfigurierens (302) unter Verwendung eines festen Verschachtelers mit einer angegebenen Verschachtelergröße ausgeführt wird.

8. Verfahren nach Anspruch 6 oder 7, wobei die CORESET-CCEs CORESET-CCEs für verbleibende Mindestsysteminformationen, RMSI, sind.

9. Einrichtung (500), die in einer Basisstation, BS, implementiert ist und umfasst:

einen oder mehrere Prozessoren (510); und
einen oder mehrere Speicher (520), die Computerprogrammcodes aufweisen,
wobei der eine oder die mehreren Speicher (520) und die Computerprogrammcodes so konfiguriert sind, dass sie mit dem einen oder den mehreren Prozessoren (510) die Einrichtung (500) zumindest veranlassen zum:

Konfigurieren von Steuerkanalelementen, CCEs, in einem Steuerressourcensatz, CORESET, basierend auf einem oder mehreren Parametern in Bezug auf die Zuordnung von CORESET-CCE zu Ressourcenelementgruppen, REG,
Blocks von Synchronisationssignal/physikalischem Broadcast-Kanal, SS/PBCH,
wobei eine Entsprechung zwischen den während der Übertragung des SS/PBCH-Blocks verwendeten Informationen und dem einen oder den mehreren Parametern in Bezug auf CORESET-CCE-REG-Zuordnung zwischen der Basisstation, BS, und einer Endgerätevorrichtung vordefiniert ist,
wobei die verwendeten Informationen sich auf Informationen beziehen, die während der Übertragung des SS/PBCH-Blocks verwendet werden,
wobei die verwendeten Informationen mindestens eines umfassen von: einem Synchronisationssignalblock-,SSB- , Unterträgerabstand, SCS; einem SCS eines physikalischen Downlink-Steuerkanals, PDCCH, für verbleibende Mindestsysteminformationen, RMSI; ersten vier Bits von RMSI-Konfiguration im SS/PBCH-Block; zweiten vier Bits von RMSI-Konfiguration im SS/PBCH-Block; reservierten Bit(s) von RMSI-Konfiguration im SS/PBCH-Block; und SSB/RMSI-Multiplex-Typ;

10. Einrichtung (500) nach Anspruch 9, wobei der eine oder die mehreren Speicher (520) und die Computerprogrammcodes so konfiguriert sind, dass sie mit dem einen oder den mehreren Prozessoren (510) die Einrichtung (500) zum Durchführen des Verfahrens nach einem der Ansprüche 6 bis 8 veranlassen.

## Revendications

1. Procédé mis en oeuvre au niveau d'un dispositif terminal, le procédé comprenant :

l'obtention (202) d'informations par la détection d'un bloc de signaux de synchronisation/canaux de diffusion physiques, SS/PBCH,
dans lequel les informations obtenues comprennent au moins l'un parmi : un espacement de sous-porteuses de bloc de signaux de synchronisation, SSB, SCS ; un SCS d'un canal de commande de liaison descendante physique, PDCCH, pour des informations système minimales restantes, RMSI ; quatre premiers bits d'une configuration de RMSI dans le bloc de SS/PBCH ; quatre deuxièmes bits d'une configuration de RMSI dans le bloc de SS/PBCH ; un ou plusieurs bits réservés d'une configuration de RMSI dans le bloc de SS/PBCH ; et un type de multiplexage de SSB/RMSI ;
la détermination (204) d'un ou plusieurs paramètres liés à un mappage d'élément de canal de commande, CCE, d'ensemble de ressources de commande, CORESET, avec groupe d'éléments de ressources, REG, sur la base des informations obtenues au cours de la détection du bloc de SS/PBCH, dans lequel une correspondance entre les un ou plusieurs paramètres liés à un mappage de CCE CORESET avec REG et les informations obtenues est prédéfinie entre le dispositif terminal et une station de base, BS,

la détermination (102, 206) d'un ensemble de candidats de PDCCH sur la base des un ou plusieurs paramètres liés à un mappage de CCE CORESET avec REG.

2. Procédé selon la revendication 1, dans lequel l'étape de la détermination (102) est réalisée en utilisant un entrelaceur fixe avec une taille d'entrelaceur indiquée.

3. Procédé selon la revendication 1 ou 2, dans lequel les CCE CORESET sont des CCE CORESET d'informations système minimales restantes, RMSI.

4. Appareil (500) mis en oeuvre dans un dispositif terminal, comprenant :

un ou plusieurs processeurs (510) ; et
une ou plusieurs mémoires (520) comprenant des codes de programme informatique,
les une ou plusieurs mémoires (520) et les codes de programme informatique étant configurés pour, avec les un ou plusieurs processeurs (510), amener l'appareil (500) au moins à :

obtenir des informations par la détection d'un bloc de signaux de synchronisation/canaux de diffusion physiques, SS/PBCH,
dans lequel les informations obtenues comprennent au moins l'un parmi : un espacement de sous-porteuses de bloc de signaux de synchronisation, SSB, SCS ; un SCS d'un canal de commande de liaison descendante physique, PDCCH, pour des informations système minimales restantes, RMSI ; quatre premiers bits d'une configuration de RMSI dans le bloc de SS/PBCH ; quatre deuxièmes bits d'une configuration de RMSI dans le bloc de SS/PBCH ; un ou plusieurs bits réservés d'une configuration de RMSI dans le bloc de SS/PBCH ; et un type de multiplexage de SSB/RMSI ;
déterminer un ou plusieurs paramètres liés à un mappage d'élément de canal de commande, CCE, d'ensemble de ressources de commande, CORESET, avec groupe d'éléments de ressources, REG, sur la base des informations obtenues au cours de la détection du bloc de SS/PBCH, dans lequel une correspondance entre les un ou plusieurs paramètres liés à un mappage de CCE CORESET avec REG et les informations obtenues est prédéfinie entre le dispositif terminal et une station de base, BS,
déterminer un ensemble de candidats de PDCCH sur la base des un ou plusieurs paramètres liés à un mappage de CCE CORESET avec REG.

5. Appareil (500) selon la revendication 4, dans lequel les une ou plusieurs mémoires (520) et les codes de programme informatique sont configurés pour, avec les un ou plusieurs processeurs (510), amener l'appareil (500) à réaliser le procédé selon l'une quelconque des revendications 2 et 3.

6. Procédé mis en oeuvre au niveau d'une station de base, BS, le procédé comprenant :

la configuration (302, 402) d'éléments de canal de commande, CCE, dans un ensemble de ressources de commande, CORESET, sur la base d'un ou plusieurs paramètres liés à un mappage de CCE CORESET avec groupe d'éléments de ressources, REG,
la transmission (404) d'un bloc de signaux de synchronisation/canaux de diffusion physiques, SS/PBCH,
dans lequel une correspondance entre des informations utilisées au cours de la transmission du bloc de SS/PBCH et les un ou plusieurs paramètres liés à un mappage de CCE CORESET avec REG est prédéfinie entre la station de base et un dispositif terminal,
dans lequel les informations utilisées font référence à des informations qui sont utilisées au cours de la transmission du bloc de SS/PBCH,
dans lequel les informations utilisées comprennent au moins l'un parmi : un espacement de sous-porteuses de bloc de signaux de synchronisation, SSB, SCS ; un SCS d'un canal de commande de liaison descendante physique, PDCCH, pour des informations système minimales restantes, RMSI ; quatre premiers bits d'une configuration de RMSI dans le bloc de SS/PBCH ; quatre deuxièmes bits d'une configuration de RMSI dans le bloc de SS/PBCH ; un ou plusieurs bits réservés d'une configuration de RMSI dans le bloc de SS/PBCH ; et un type de multiplexage de SSB/RMSI.

7. Procédé selon la revendication 6, dans lequel l'étape de la configuration (302) est réalisée en utilisant un entrelaceur fixe avec une taille d'entrelaceur indiquée.

8. Procédé selon la revendication 6 ou 7, dans lequel les CCE CORESET sont des CCE CORESET d'informations système minimales restantes, RMSI.

9. Appareil (500) mis en oeuvre dans une station de base, BS, comprenant :

   un ou plusieurs processeurs (510) ; et
   une ou plusieurs mémoires (520) comprenant des codes de programme informatique,
   les une ou plusieurs mémoires (520) et les codes de programme informatique étant configurés pour, avec les un ou plusieurs processeurs (510), amener l'appareil (500) au moins à :

   configurer des éléments de canal de commande, CCE, dans un ensemble de ressources de commande, CORESET, sur la base d'un ou plusieurs paramètres liés à un mappage de CCE CORESET avec groupe d'éléments de ressources, REG ;
   transmettre un bloc de signaux de synchronisation/canaux de diffusion physiques, SS/PBCH,
   dans lequel une correspondance entre des informations utilisées au cours de la transmission du bloc de SS/PBCH et les un ou plusieurs paramètres liés à un mappage de CCE CORESET avec REG est prédéfinie entre la station de base et un dispositif terminal,
   dans lequel les informations utilisées font référence à des informations qui sont utilisées au cours de la transmission du bloc de SS/PBCH,
   dans lequel les informations utilisées comprennent au moins l'un parmi : un espacement de sous-porteuses de bloc de signaux de synchronisation, SSB, SCS ; un SCS d'un canal de commande de liaison descendante physique, PDCCH, pour des informations système minimales restantes, RMSI ; quatre premiers bits d'une configuration de RMSI dans le bloc de SS/PBCH ; quatre deuxièmes bits d'une configuration de RMSI dans le bloc de SS/PBCH ; un ou plusieurs bits réservés d'une configuration de RMSI dans le bloc de SS/PBCH ; et un type de multiplexage de SSB/RMSI.

10. Appareil (500) selon la revendication 9, dans lequel les une ou plusieurs mémoires (520) et les codes de programme informatique sont configurés pour, avec les un ou plusieurs processeurs (510), amener l'appareil (500) à réaliser le procédé selon l'une quelconque des revendications 6 à 8.

Determine a set of PDCCH candidates based on one or more CORESET CCE to REG mapping related parameters which are fixed ∽ 102

## FIG. 1

Obtain information by detecting an SS/PBCH block ∽ 202

Determine one or more CORESET CCE to REG mapping related parameters, based on the information obtained during the detection of the SS/PBCH block ∽ 204

Determine a set of PDCCH candidates based on the one or more CORESET CCE to REG mapping related parameters ∽ 206

## FIG. 2

Configure CCEs in a CORESET based on one or more
CORESET CCE to REG mapping related parameters
which are fixed

302

## FIG. 3

Configure CCEs in a CORESET based on one or more
CORESET CCE to REG mapping related parameters

402

Transmit an SS/PBCH block, wherein a correspondence
between information used during the transmission of the
SS/PBCH block and the one or more CORESET CCE to
REG mapping related parameters is predefined between
the BS and a terminal device

404

## FIG. 4

500

510

Memory

Processor

530

Communication
I/F

520

## FIG. 5

Apparatus
600

Determination module
602

FIG. 6

Apparatus
700

Configuration module
702

FIG. 7

Apparatus
800

Obtaining module
802

First determination
module 804

Second determination
module 806

FIG. 8

Apparatus
900

Configuration module
902

Transmission module
904

FIG. 9

FIG. 10

*3300*

*3310* **Host computer**

*3311*
**SW**

*3312*
Host application

*3315*
**HW**

*3316*
Communication interface

*3318*
Processing circuitry

*3360*

*3320* **Base station**

*3321*
**SW**

*3325*
**HW**

*3326*
Communication interface

*3327*
Radio interface

*3328*
Processing circuitry

*3330* **UE**

*3331*
**SW**

*3332*
Client application

*3335*
**HW**

*3337*
Radio interface

*3338*
Processing circuitry

*3350*

*3370*

FIG. 11

FIG. 12

BEGIN

**3510**
Host computer provides user data

**3520**
Host computer initiates transmission carrying the user data to the UE

**3530**
UE receives the user data

END

FIG. 13

BEGIN

```
3610
UE receives
input data
provided at
host computer
```

```
3611
UE executes
client
application
```

```
3620
UE provides
user data
```

```
3621
UE executes
client
application
```

```
3630
UE initiates
transmission
of the user
data to the
host computer
```

```
3640
Host computer
receives user
data
transmitted
from the UE
```

END

FIG. 14

BEGIN

```
3710
Base station
receives user
data from UE
```

```
3720
Base station
initiates
transmission
of user data to
the host
computer
```

```
3730
Host computer
receives the
user data
```

END

FIG. 15

**EP 3 536 090 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **INTEL CORPORATION.** Remaining details of NR-PDCCH structure. *3GPP draft; R1-1720081,* 18 November 2017

- **INTERDIGITAL COMMUNICATIONS.** Remaining issues related to CORSET configuration. *R1-1716475,* 17 September 2017